# EUROPÄISCHE PATENTANMELDUNG

(11) **EP 2 383 211 A1**
(43) Veröffentlichungstag der Anmeldung: **02.11.2011**
(21) Anmeldenummer: 11003418.8
(22) Anmeldetag: 26.04.2011
(51) Int. Cl.: B65G 47/91

(54) **Verfahren und Vorrichtung zum Aufnehmen, Verlagern und Ablegen von Portionen eines Lebensmittels**

(30) Priorität: 30.04.2010 DE 102010028410
(71) Anmelder: Reifenhäuser, Uwe, 57632 Flammersfeld (DE)
(72) Erfinder: Reifenhäuser, Uwe, 57632 Flammersfeld (DE)
(74) Vertreter: Bauer, Dirk

(57) **Zusammenfassung**

Ein Verfahren zum Aufnehmen von Portionen, insbesondere von Scheiben, eines Lebensmittels von einer Oberfläche eines Transportmittels, insbesondere von einem sich bewegenden Band, zum Verlagern der aufgenommenen Portionen und zum Ablegen der Portionen an einem Zielort, insbesondere in oder auf einer Verpackung, weist die folgenden Verfahrensschritte auf:
- Portionen eines Lebensmittels werden auf einer Oberfläche eines insbesondere umlaufenden Transportmittels in eine Transportrichtung bewegt,
- sukzessive nach einander wird jeweils eine Portion mittels einer Greifeinrichtung (1) ergriffen, wobei
- ein Fixierelement (3) auf einer einer Auflagefläche der Portion entgegengesetzten freien Oberfläche der Portion mit dieser in Kontakt gebracht wird und
- mindestens zwei Schaufelelemente (4) der Greifeinrichtung (1) aufeinander zu bewegt werden, wobei die Portion von entgegengesetzten Seiten her untergriffen wird,
- die untergriffene Portion wird von der Oberfläche des Transportmittels abgehoben, indem die Greifeinrichtung (1) entsprechend bewegt wird,
- die abgehobene Portion wird mittels der Greifeinrichtung (1) quer zu der Transportrichtung bewegt und oberhalb des Zielortes positioniert,
- die zwei Schaufelelemente (4) werden von einander weg bewegt, wobei die positionierte Portion an dem Zielort abgelegt wird.

Um das Zusammenwirken zwischen Fixierelement (3) und Schaufelelementen (4) zu verbessern und eine hohe Geometriegenauigkeit der aufgenommenen und abgelegten Portionen zu erzielen wird vorgeschlagen, dass die Portion mittels des als Saugelement (3) ausgebildeten Fixierelements (3) der Greifeinrichtung (1) angesaugt und dadurch fixiert wird. Darüber hinaus wird eine Vorrichtung zur Durchführung des vorgenannten Verfahrens vorgeschlagen.

## Beschreibung

### Einleitung

Die Erfindung betrifft ein Verfahren zum Aufnehmen von Portionen, insbesondere von Scheiben, eines Lebensmittels von einer Oberfläche eines Transportmittels, insbesondere von einem sich bewegenden Band, zum Verlagern der aufgenommenen Portionen und zum Ablegen der Portionen an einem Zielort, insbesondere in oder auf einer Verpackung, mit den folgenden Verfahrensschritten:
- Portionen eines Lebensmittels werden auf einer Oberfläche eines insbesondere umlaufenden Transportmittels in eine Transportrichtung bewegt,
- sukzessive nacheinander wird jeweils eine Portion mittels einer Greifeinrichtung ergriffen, wobei
   - ein Fixierelement auf einer einer Auflagefläche der Portion entgegen gesetzten freien Oberfläche der Portion mit dieser in Kontakt gebracht wird und
   - mindestens zwei Schaufelelemente der Greifeinrichtung aufeinander zu bewegt werden, wobei die Portion von entgegen gesetzten Seiten her untergriffen wird,
- die untergriffene Portion wird von der Oberfläche des Transportmittels abgehoben,
- die abgehobene Portion wird mittels der Greifeinrichtung quer zu der Transporteinrichtung bewegt und oberhalb des Zielortes positioniert,
- die zwei Schaufelelemente werden voneinander wegbewegt, wobei die positionierte Portion an dem Zielort abgelegt wird, und
- die Portion wird mittels des als Saugelement ausgebildeten Fixierelements der Greifeinrichtung angesaugt und dadurch fixiert.
Des Weiteren betrifft die Erfindung eine Vorrichtung zum Aufnehmen, Verlagern und Ablegen von Portionen, insbesondere Scheiben, eines Lebensmittels, wobei die Portionen von einem sich bewegenden Transportmittel aufnehmbar, zu einem Zielort bewegbar und dort absetzbar sind, mit
- einer Trageinrichtung, die mindestens in vertikale Richtung und in eine Richtung senkrecht zu der Transportrichtung des Transportmittels bewegbar ist,
- einer an der Trageinrichtung angeordneten Greifeinrichtung, die zwei aufeinander zu bewegbare Schaufelelemente aufweist, mit denen eine Portion von entgegen gesetzten Seiten her untergreifbar ist,
- mit einer Fixiereinrichtung, mit der eine Portion an einer einer Auflagefläche der Portion entgegen gesetzten freien Oberfläche an der Greifeinrichtung fixierbar ist, wobei die Fixiereinrichtung als Saugelement ausgebildet ist, mit dem die Portion ansaugbar und dadurch an der Greifeinrichtung fixierbar ist.

### Stand der Technik

Ein Verfahren und eine Vorrichtung der vorstehend charakterisierten Art ist aus der US 2006/0182603 A1 bekannt. Details zur genauen Ausgestaltung sind in dieser Schrift nicht offenbart.

Ein Verfahren ohne Saugelement und eine Vorrichtung, die zur Durchführung dieses rein auf Schaufelelementen basierenden Verfahrens geeignet ist, ist auf der Website der Firma Weber, Inc., Kansas City/USA (www.weberslicer.com) unter der Rubrik "Weber Pic and Place Robotics" offenbart. Von einem sich bewegenden Transportband werden Schneidgutportionen, z.B. geschindelt abgelegte Salamischeiben oder Schinkenscheiben, von der Greifeinrichtung ergriffen und abgehoben und in schalenförmige Unterteile von Kunststoffverpackungen abgelegt, die in weiteren hier nicht relevanten Prozessschritten zu SB-Lebensmittelverpackungen verpackt werden. Die Vorderkanten der Schaufelelemente verlaufen parallel zu der Transportrichtung des Transportbandes und in einem Mittelbereich der Greifeinrichtung zwischen den beiden Schaufelelementen befindet sich ein Fixierelement in Form eines Niederhalter-Stempels, der an seinem der Lebensmittelportion zugewandten unteren Ende mit einer vergrößerten Fixierplatte versehen ist.

Das Fixierelement hat - unabhängig davon, ob es mit oder ohne Saugfunktion arbeitet - die Aufgabe, ein Verrutschen der Lebensmittelportion während des Aufnehmens derselben, insbesondere während des Untergreifens durch die Schaufelelemente, zu vermeiden. Darüber hinaus soll das Fixierelement mit dafür sorgen, dass die Integrität der Lebensmittelportion, d.h. insbesondere die geometrisch exakte Positionierung (z.B. Schindelung) der eine Portion bildenden Einzelscheiben nicht beeinträchtigt wird. Darüber hinaus muss das Fixierelement auch verhindern, dass sich die Lebensmittelportion - insgesamt oder in Teilen - nach dem Abheben von dem Transportband und während der anschließenden Verlagerung relativ zu den Schaufeln, d.h. zu dem Greiferelement, verschiebt bzw. verrutscht. Die Gefahr eines derartigen Verrutschens ist deshalb bei modernen roboterbasierten Greifsystemen nicht unbeträchtlich, weil die Dynamik der Bewegungsvorgänge enorm ist. Aufgrund der recht hohen Bandgeschwindigkeit und des teilweise mehrreihig parallel zueinander erfolgenden Ankunft der Portionen ist die Greiffrequenz extrem hoch. So vergeht für einen vollständigen Zyklus, d.h. das Fixieren, Untergreifen, Anheben, Verlagern, Öffnen der Schaufeln und Absetzen der Portion und wieder Zurückfahren der Greifeinrichtung nur eine Zeit im Bereich von Millisekunden. Die von der Greiferbeschleunigung und -verzögerung verursachten, auf die Portion wirkenden Kräfte sind folglich sehr groß.

Problematisch bei dem bekannten Verfahren und der diesbezüglichen Vorrichtung ist der Umstand, dass ein Fixieren durch Druck von oben und ein Untergreifen mittels der Schaufeln von unten in Kombination miteinander Schwierigkeiten bereiten und schwer aufeinander abzustimmen sind. Wird der Druck auf die Scheiben zu früh ausgeübt und ist er betraglich zu groß, so wird das Untergreifen durch die Schaufeln erschwert, so dass es in Randbereichen zu unerwünschten Aufwölbungen oder Verwerfungen der Portion kommen kann. Für ein druckbasiertes (reibungsbasiertes) Fixieren im Mittelbereich der Portion ist es unerlässlich, dass auch dort die Portion von den Schaufeln unterstützt wird, da ansonsten keine Gegenkraft erzeugt werden kann. Ist der Druck der Fixiereinrichtung zu gering bzw. wird er zu spät ausgeübt, so besteht die Gefahr, dass die Schaufeln das Produkt nicht gleichmäßig untergreifen, sondern relativ zu dem Transportband verlagern bzw. auch verdrehen. Beide vorgenannten Problemfälle führen zu unerwünschten Abweichungen in der Geometriegenauigkeit der späteren Ablage der Portion sowie zu Unzulänglichkeiten in deren optischer Qualität.

Bei Fixierelementen mit Saugfunktion besteht die Problematik einer zuverlässigen Unterdruckerzeugung in dem Saugraum sowie der Behandlung von Portionen mit schwankender Höhe bzw. von bewussten Höhenänderungen bei den Portionen.

### Aufgabe

Der Erfindung liegt somit die Aufgabe zugrunde, ein Verfahren und eine Vorrichtung zum Aufnehmen, Verlagern und Ablegen von Lebensmittelportionen unter Verwendung eines Saugelements als Fixiereinrichtung vorzuschlagen, mit dem sich auch bei Schwankungen in der Portionshöhe bzw. geplanten Höhenänderungen Verschiebungen oder Verwerfungen an der Portion während der Aufnahme, Verlagerung und Ablage der Lebensmittelportionen vermeiden lassen.

### Lösung

Ausgehend von einem Verfahren der eingangs beschriebenen Art wird die Aufgabe erfindungsgemäß dadurch gelöst, dass das Saugelement, nachdem es mit der freien Oberfläche der Portion in Kontakt gekommen ist, zumindest mit einer vertikalen Bewegungskomponente relativ zu den Schaufelelementen bewegt wird.

Die Erfindung geht zunächst von der Erkenntnis aus, dass eine Fixierung der Portionen dann besonders gut mit dem Untergreifen durch die Schaufelelemente harmoniert, wenn die fixierende Kraft nicht als Druckkraft nach unten (um eine Reibkraft zu erzeugen) sondern besser in entgegen gesetzte Richtung, d.h. vertikal nach oben, wirkt. Hierdurch wird zwar ebenso - zumindest temporär zur Initiierung der Ansaugung der Portion - eine Druckkraft an einer Kontaktfläche des Saugelements erzeugt, es ist jedoch nicht - wie bei einer vertikal nach unten gerichteten reinen und dauerhaften Druckkraft - die Höhe dieser Kraft für die fixierende Reibkraft entscheidend. Bei dem erfindungsgemäßen Verfahren kann theoretisch gänzlich ohne Druckkraft nach unten gearbeitet werden, wenn das Saugelement in einem solchermaßen geringem Abstand oberhalb der Oberseite der aufzunehmenden Portion positioniert wird, dass ohne die Ausübung eines Drucks auf die Lebensmittelportion eine Ansaugung und ein Heranziehen erfolgt. In der Praxis wird nach der Erfindung jedoch meist ein Weg beschritten werden, bei dem das Saugelement mit leichtem Druck auf die Oberfläche der Portion aufgesetzt wird, um nach Anlegen des Unterdrucks eine sichere Ansaugung und Fixierung zu erhalten. Nach einmal erfolgter Fixierung kann der vertikale Druck auf die Lebensmittelportion nach unten jedoch gänzlich eingestellt werden und das Saugelement sogar um ein geringfügiges Maß von der Oberfläche des Transportmittels zurückgezogen werden, weil die Fixierung aufgrund der Ansaugung hierunter nicht leidet. Grundsätzlich könnten die Portionen auch allein mittels des Saugelements gehalten und in dieser Form - ohne Schaufelunterstützung - angehoben und verlagert werden. Insbesondere bei "biegeschlaffen" Portionen, wie z.B. Frischfleisch oder aus einer Mehrzahl geschindelter Scheiben bestehenden Portionen, ist die Verwendung der zusätzlichen Schaufeln als eine Art "Stützkorsett" für die zu manipulierende Portion wichtig.

Erfindungsgemäß erleichtert jedenfalls das Fixieren durch Ansaugung das Zusammenspiel mit den Schaufelelementen ganz wesentlich, so dass die Gefahr drastisch reduziert wird, dass beim Zusammenfahren der Schaufelelemente unerwünschte Bewegungen der Lebensmittelportion eintreten. Selbst bei hochdynamischen Prozessen kann mit dem erfindungsgemäßen Verfahren eine ausgezeichnete Qualität der Produktablage und der Produktoptik erzielt werden.

Das wesentliche Erfindungsmerkmal besteht darin, dass aufgrund der relativen vertikalen Beweglichkeit des Saugelements zu den Schaufelelementen und damit zu der Greifereinrichtung als solche deren Bewegungspräzision nicht übermäßig groß ausgebildet werden muss, um eine sichere und doch zugleich schonende Abdichtung des Saugraums und anschließend eine Fixierung der Portion zu erreichen. Bei starr an der Greifeinrichtung befestigten Saugelementen muss die Greifeinrichtung sehr genau an die Oberseite der Portion herangeführt werden, um eine gute Abdichtung zu erzielen. Aufgrund von unvermeidbaren Höhenschwankungen, wie sie beim heute üblichen gewichtsgenauen Schneiden bei Lebensmittelsträngen mit sich über deren Länge änderndem Querschnitt regelmäßig auftreten, müsste die Greifeinrichtung mit entsprechender Sensorik sehr exakt mit der Unterseite des Saugelements auf der Oberseite der Portion positioniert werden. Ein bewusst stets zu tiefes Eindrücken des Saugelements in die Oberseite der Portion ist bei harten (z.B. gefrorenen) Portionen unmöglich und kann bei weichen Portionen zur plastischen Verformung bis hin zur Zerstörung der der Integrität der Portion führen. Jedenfalls würde die optische Qualität der Portion hierdurch stark gefährdet. Müsste aber eine sehr hohe Präzision bei der Saugelement-Positionierung eingehalten werden, so würde dies angesichts der extrem großen Dynamik des Bewegungsablaufs einen übergebührlich hohen maschinellen und steuerungstechnischen Aufwand (Sensorik, Leistung der Antriebe etc.) bedeuten.

Die Erfindung löst dieses Problem auf elegante Weise durch die relative Beweglichkeit des Saugelements, wobei dieses stets etwas weiter auf die Oberfläche des Transportmittels zubewegt werden könnte (wenn keine Portion dort befindlich wäre) als dies durch die freie Portionsoberfläche tatsächlich möglich ist. Es kommt somit garantiert zu einem Aufsetzen der Unterseite des Saugelements auf die Oberfläche der Portion, bevor die Greifeinrichtung und die Schaufelelemente ihre Absenkbewegung in Richtung der Oberfläche des Transportmittels beendet haben. Folglich liegt eine Art automatische Einstellung des Abstands des Saugelements von der Oberfläche des Transportmittels vor, die von der jeweiligen Höhe der zu greifenden Portion bestimmt wird und somit eine für jede Portion individuelle Positionierung erübrigt. Der Aufwand ist dementsprechend gering und die Fixiersicherheit gleichwohl sehr groß. Vorzugsweise wird der Unterdruck erst dann aufgebaut, wenn die Greifeinrichtung ihre Absenkbewegung vollständig beendet hat, d.h. auch die Relativbewegung zwischen einem Grundkörper der Greifeinrichtung und dem Saugelement abgeschlossen ist.

Gemäß einer besonders vorteilhaften Ausgestaltung der Erfindung wird die Portion in einem Mittelbereich der freien Oberfläche angesaugt und fixiert. Hierdurch wird das Zusammenwirken zwischen Unterdruck, Fixierung und Untergreifen mittels der Schaufelelemente verbessert, da die Portion in ihren Randbereichen vorzugsweise frei ist und daher im Zuge des Unterschiebens der Schaufeln bedarfsweise von letzteren leicht angehoben werden kann.

Um hygienische Probleme in Verbindung mit dauernd in Betrieb befindlichen Vakuumpumpen zu vermeiden (Ansaugen von Lebensmittelpartikeln in den Saugschlauch und die Pumpe), wird nach einer Weiterbildung des erfindungsgemäßen Verfahrens vorgeschlagen, den Unterdruck in dem Saugelement mittels einer Kolben-Zylinder-Einheit durch einmalige Hubbewegung des Kolbens in dem Zylinder zu erzeugen.

Angesichts der großen Dynamik der hier in Rede stehenden Greif- und Verlagerungsprozesse ist es wichtig, die bewegte Masse im Bereich der Greifeinrichtung, bei der die größten Beschleunigungen und Verzögerungen auftreten, möglichst gering zu halten. Daher ist es sinnvoll, den Unterdruck in dem Saugelement an einem von der Greifeinrichtung beabstandeten Ort zu erzeugen und mittels einer Leitung von dem Ort zu dem Saugelement zu übertragen. Möglichst sollte die Unterdruckerzeugung an einem stillstehenden Ort stattfinden.

Die Arbeitsfrenquenz beim Ergreifen und Ablegen und damit auch die Leistung des erfindungsgemäßen Verfahrens kann gesteigert werden, wenn das Saugelement beim Ablegen einer Portion mit einem Überdruck beaufschlagt wird, wodurch der Portion eine abwärts auf den Zielort gerichtete Beschleunigung erteilt wird, die größer als die Erdbeschleunigung ist.

Insbesondere in Verbindung mit einer Saugfixierung lediglich in einem Mittelbereich der Portion wird vorgeschlagen, die aufeinander zu gerichtete Bewegung der zwei Schaufelelemente zu einem Zeitpunkt zu beenden, zu dem zwischen gegenüber liegenden Vorderkanten der Schaufelelementen ein Abstand besteht. Auf diese Weise wird den nicht durch die mittlere Fixierzone festgehaltenen Randbereichen der Portion eine Art randseitiges "Stützkorsett" erteilt, so dass die Portion im Ergebnis über ihre gesamte Fläche stabilisiert und insgesamt an unkontrollierten Bewegungen während des Verlagerns gehindert ist.

Ausgehend von einer Vorrichtung der weiter oben beschriebenen Art wird die Aufgabe erfindungsgemäß dadurch gelöst, dass das Saugelement so an der Greifeinrichtung gelagert ist, dass es zumindest mit einer vertikalen Bewegungskomponente relativ zu den Schaufelelementen beweglich ist. Mit einer derartigen Vorrichtung lässt sich das erfindungsgemäße Verfahren auf einfache Weise durchführen.

In Weiterentwicklung der erfinderischen Idee kann das Saugelement mittels einer Kolben-Zylinder-Einheit mit einem Unterdruck und/oder Überdruck beaufschlagbar sein. Dabei ist es sinnvoll, die Einrichtung zur Erzeugung des Unterdrucks und/oder Überdrucks, insbesondere eine Kolben-Zylinder-Einheit, stillstehend in einem Abstand von der Greifeinrichtung anzuordnen und den Unterdruck und/oder Überdruck mittels einer Leitung zu dem Saugelement zu übertragen. Die beim Greif- und Verlagerungsvorgang zu beschleunigenden Massen im Bereich des Greifelements, wo die größten Beschleunigungen auftreten, werden auf diese Weise klein gehalten.

Ferner sollte das Saugelement - in eine Bewegungsrichtung der Schaufelelemente betrachtet - mittig zwischen den Schaufelelementen angeordnet sein.

Darüber hinaus besteht eine Weiterbildung der erfindungsgemäßen Vorrichtung noch darin, dass eine Kontaktfläche des Saugelements, die bei der Fixierung der Portion mit deren Oberfläche in Berührung kommt, ohne Einwirkung äußerer Kräfte einen vertikalen Abstand von Unterflächen der beiden Schaufelelemente aufweist, der einer maximalen vertikalen Höhe der dünnsten aufzunehmenden Portion entspricht, wobei das Saugelement relativ zu den Schaufelelementen so bewegbar ist, dass der Abstand der Kontaktfläche des Saugelements von den Unterflächen der Schaufelelemente vergrößerbar ist und zwar mindestens um ein Maß, das der Differenz zwischen der Höhe der dicksten aufzunehmenden Portion und der Höhe der dünnsten aufzunehmenden Portion entspricht.

Hierdurch lässt sich eine Anpassung des Greifelements an Portionen mit unterschiedlichen Dicken erreichen, wobei Portionen mit geringer Dicke beispielsweise von gefächert angeordneten Rohschinken-Scheiben und Portionen mit großer Dicke etwa von Koteletts oder Schnittkäsestücken gebildet werden.

Die Erfindung weiter ausgestaltend ist schließlich noch vorgesehen, dass das Saugelement entgegen der Kraft eines Federelements, vorzugsweise einer Gasfeder, relativ zu den Schaufelelementen bewegbar, insbesondere vertikal verschiebbar ist, wobei das Federelement in eine Richtung vorgespannt ist, sodass sich die Kontaktfläche des Saugelements ohne Einwirkung äußerer Kräfte in einem Abstand zu den Unterflächen der Saugelemente befindet, in der die dünnste mögliche Portion aufnehmbar ist.

Auf diese Weise erfolgt eine automatische Anpassung der Position des Saugelements an die aktuelle Dicke der gerade zu ergreifenden Portion. Die Anpassung erfolgt automatisch in dem Sinne, dass die Greifeinrichtung auf die aufzunehmende Portion abgesetzt wird, wobei das Saugelement mit seiner Kontaktfläche zuerst mit der Oberfläche der Portion in Kontakt kommt und einer weiteren Abwärtsbewegung der Greifeinrichtung jedoch nicht folgt, weshalb eine Relativbewegung zwischen den Schaufelelementen und dem Saugelement stattfindet. Die Abwärtsbewegung der Greifeinrichtung wird in dem Moment beendet, wo die Schaufelelemente mit Vorderkanten ihrer Schaufeln oder deren gesamter Unterfläche - vorzugsweise mit einer geringen Anpresskraft - auf der Oberfläche des Transportmittels, d.h. typischerweise eines Förderbandes oder aber auch Förderriemchen oder gliedförmigen Elementen, aufliegen. Durch das Federelement wird im Zuge der Relativbewegung zwischen den Schaufelelementen und dem Saugelement eine gewisse Anpresskraft auf die aufzunehmende Portion ausgeübt, so dass eine sichere Abdichtung im Bereich der Kontaktfläche des Saugelements und somit auch ein sicherer Vakuumaufbau und im Ergebnis eine hinreichende Fixierung der Portion gewährleistet ist. Ohne Federkraft wäre allein die Gewichtskraft des Saugelements für die Herbeiführung einer zuverlässigen Abdichtung verantwortlich.

### Ausführungsbeispiel

Die Erfindung wird nachfolgend anhand eines Ausführungsbeispiels einer Greifeinrichtung, die in der Zeichnung dargestellt ist, näher erläutert.

Es zeigt:
- Fig. 1:: Eine perspektivische Ansicht einer Greifeinrichtung in einer Öffnungsstellung,
- Fig. 2:: wie Figur 1, jedoch in einer Schließstellung,
- Fig. 3:: eine Seitenansicht der Greifeinrichtung nach Figur 1 in der Öffnungsstellung,
- Fig. 4:: eine Draufsicht auf die Greifeinrichtung gemäß Figur 1 in der Öffnungsstellung,
- Fig. 5:: einen Schnitt durch die Greifeinrichtung nach den Figuren 1 bis 4, *(fehlt noch)*
- Fig. 6:: eine Unteransicht der Greifeinrichtung gemäß den Figuren 1 bis 5,

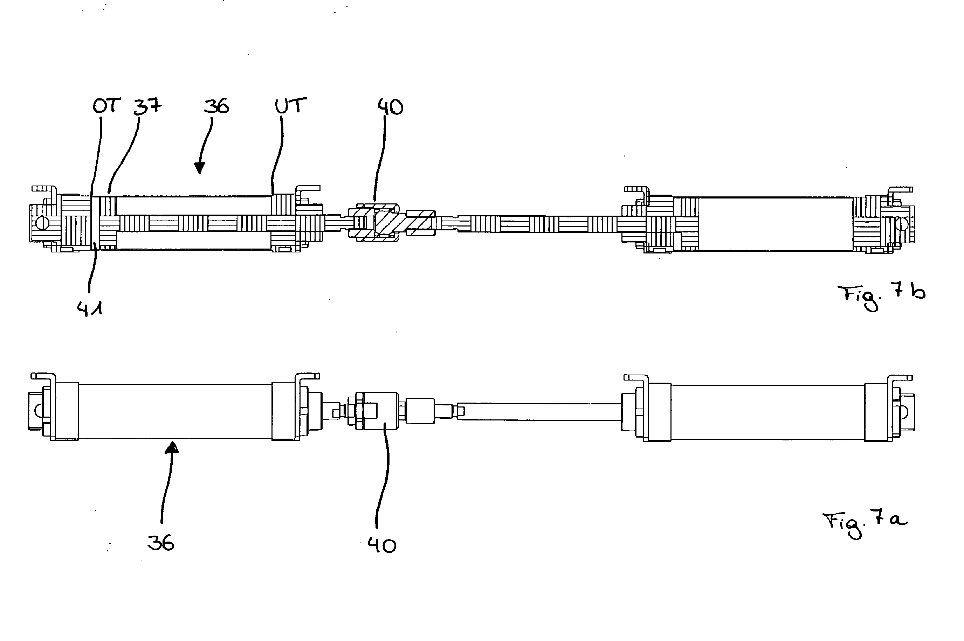

- Fig. 7a:: eine Ansicht einer Einrichtung zur Erzeugung von Unterdruck- bzw. Überdruck in dem Saugelement,
- Fig. 7b:: einen Schnitt durch die Einrichtung gemäß Fig. 7a,
- Fig. 8a:: eine Seitenansicht der Greifeinrichtung in der Öffnungsstellung über einer aufzunehmenden Portion,
- Fig. 8b:: wie Fig. 8a jedoch in einem Schnitt,
- Fig. 9a:: wie Fig. 8a jedoch in einem abgesenkten Zustand der Greifeinrichtung,
- Fig. 9b:: wie Fig. 9a jedoch in einem Schnitt,
- Fig. 10a:: wie Fig. 9a jedoch in zusammengefahrenen Zustand der Schaufelelemente,
- Fig. 10b:: wie Fig. 10a jedoch in einem Schnitt,
- Fig. 11a:: wie Fig. 10a jedoch in einem nach oben angehobenen Zustand der Greifeinrichtung,
- Fig. 11b:: wie Fig. 11 a jedoch in einem Schnitt,
- Fig. 12a:: wie Fig. 11 a jedoch in einer Position oberhalb einer Verpackungsschale mit auseinander gefahrenen Schaufelelementen,
- Fig. 12b:: wie Fig. 12a jedoch in einem Schnitt,
- Fig. 13a:: wie Fig. 12a jedoch mit in der Verpackungsschale abgelegter Portion und
- Fig. 13b:: wie Fig. 13a jedoch in einem Schnitt.

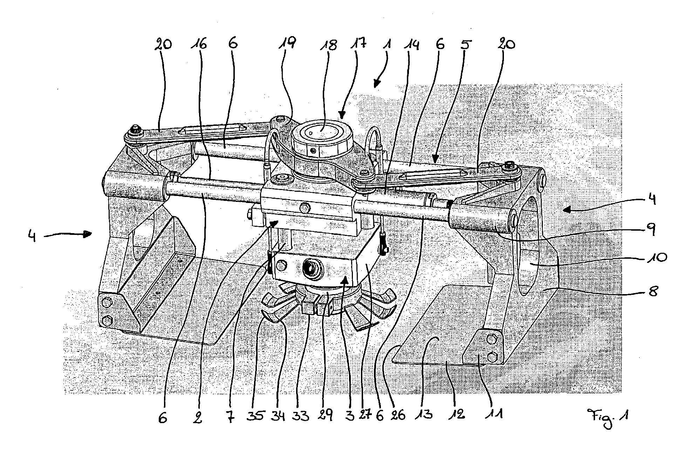

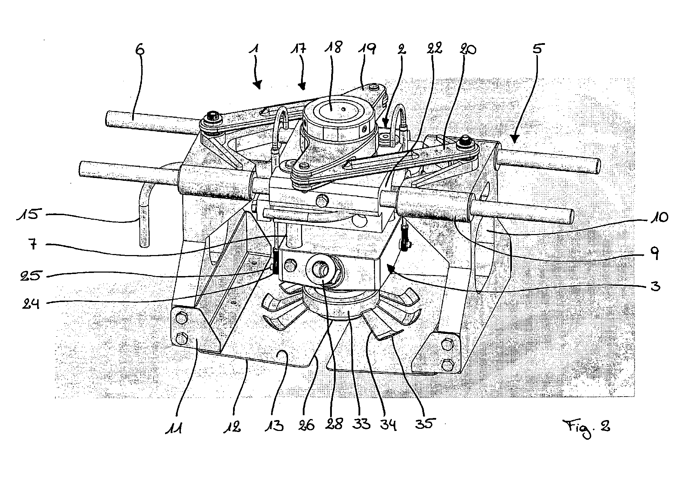

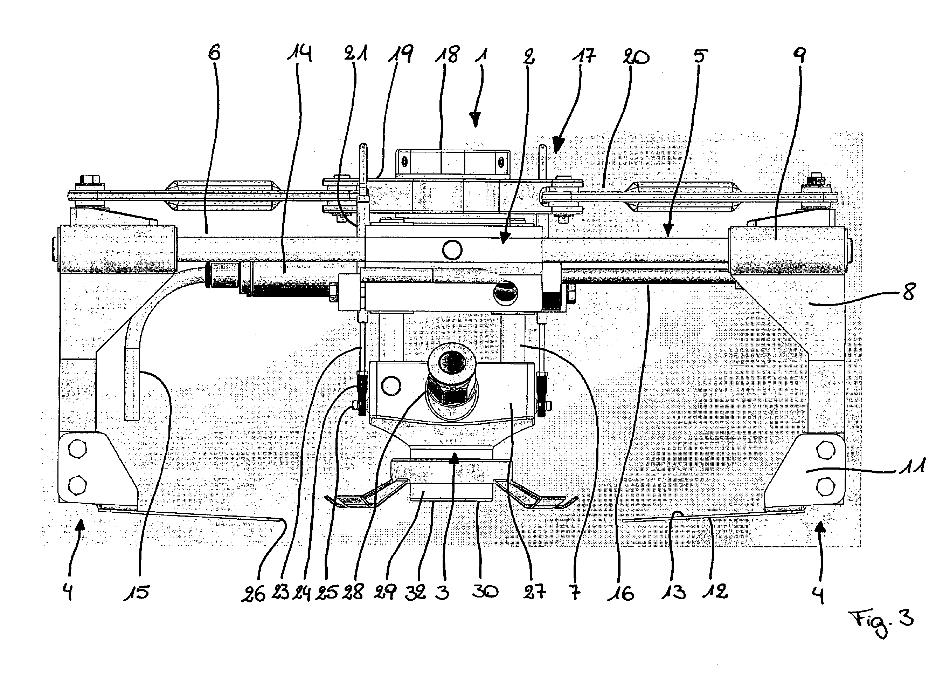

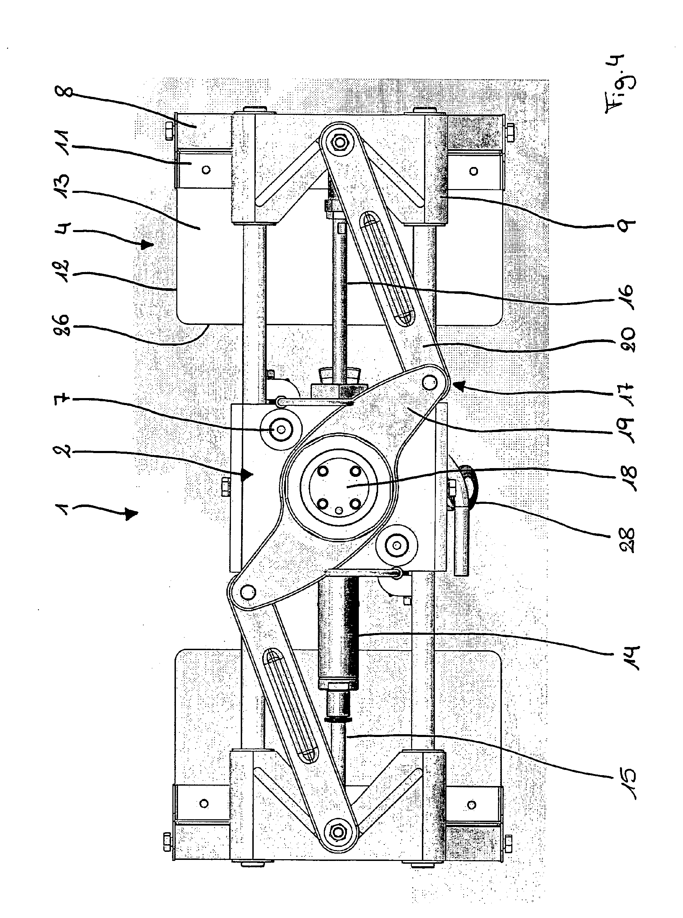

Eine in den Figuren 1 bis 6 dargestellte Greifeinrichtung 1 bildet einen Teil eines bekannten, jedoch nicht im Ganzen dargstellten Handlingsystems für das Verlagern von Lebensmittelportionen, insbesondere solchen in Scheibenform, wobei es sich um dickere Einzelscheiben (Koteletts, Steaks, Schnittkäsestücke, etc.) oder um eine Ansammlung einer Mehrzahl dünnerer Scheiben handeln kann, die dann typischerweise in gefächerter bzw. geschindelter Anordnung vorliegen (z.B. Schinken, Salami, Fleischwurst, Käse, Räucherlachs, etc.). Die Greifeinrichtung 1 befindet sich an einem Ende einer nicht dargestellten Trageinrichtung, die wiederum einen Teil eines Robotersystems bildet. Die Trageinrichtung ermöglicht es, dass die Greifeinrichtung 1 zwischen den Orten, zwischen denen die Verlagerung der Portionen des Lebensmittels zu erfolgen hat, bewegt werden kann. So kann es beispielsweise der Fall sein, dass Lebensmittelportionen von einem Transportmittel in Form eines Transportbandes, mit dem sie von einer Schneidvorrichtung wegbewegt werden, abgehoben und sodann auf einem anderen Transportband abgelegt werden. Häufig ist es auch der Fall, dass nach dem Aufschneiden der Lebensmittelportionen diese von dem Transportband greifend aufgenommen und sodann in eine Verpackung, typischerweise eine aus Kunststoff bestehende Schale, verlagert werden. Häufig werden aufgeschnittene Lebensmittel nämlich unmittelbar im Anschluss an den Schneidvorgang in einer Verpackungsmaschine in Selbstbedienungsverpackungen eingeschweißt.

Die Greifeinrichtung 1 selbst umfasst ein Zentralteil 2, ein damit verbundenes Saugelement 3 und zwei gleichfalls damit verbundene Schaufelelemente 4. Von dem Zentralteil 2 gehen in entgegen gesetzte Richtungen jeweils zwei Linearführungen 5 ab, die jeweils von den Körper des Zentralteils 2 durchdringenden Führungsstangen 6 gebildet werden. Weitere Führungsstangen 7 übernehmen darüber hinaus auch die verschiebbare Anbindung des Saugelements 3 an das Zentralteil 2. Die Bewegungsrichtung des Saugelements 3 ist senkrecht zu der Ebene, die durch die Führungsstangen 6 für die Schaufelelemente 4 aufgespannt wird.

Die Schaufelelemente 4 selbst bestehen jeweils aus einem Schaufelträger 8, der an seiner Oberseite jeweils mit zwei Lagerbuchsen 9 versehen ist, in denen die Führungsstangen 6 der Linearführung 5 verschiebbar gelagert sind. Um das Gewicht der Greifeinrichtung 1 niedrig zu halten, sind die Schaufelträger 8 stirnseitig jeweils mit einem groß dimensionierten Durchbruch 10 versehen.

An der Unterseite der Schaufelträger ist jeweils über einen geschraubten Verbindungswinkel 11 ein ebenes, in der Form rechteckiges Schaufelblatt 12 befestigt. Das Schaufelblatt 12 kann aus Edelstahlblech oder aus einem verschleißfesten aber reibungsarmen Kunststoffmaterial bestehen. Mit jeweils einer Oberfläche 13 des Schaufelblatts 12 untergreifen die Schaufelelemente 4 die Unterseite einer aufzunehmenden Lebensmittelportion.

Um eine lineare Bewegung der Schaufelelemente 4 aufeinander zu (beim Schließen des der Greifeinrichtung 1) bzw. voneinander weg (beim Öffnen der Greifeinrichtung 1) zu ermöglichen, ist an dem Zentralteil 2 ein Stellglied in Form eines Pneumatikzylinders 14 befestigt. Über eine Druckluftleitung 15, die über die nicht dargestellte Trageinrichtung verläuft und flexibel ausgeführt ist, wird der Pneumatikzylinder 14 mit Druckluft versorgt. Eine Kolbenstange 16 des Pneumatikzylinders 14 ist an dem Schaufelträger 8 eines der beiden Schaufelelemente 4 angelenkt. Fährt die Kolbenstange 16 aus, so wird dieses Schaufelelement 4 in die Öffnungsstellung bewegt und umgekehrt.

Die Kopplung beider Schaufelelemente 4 erfolgt an der Oberseite des Zentralteils 2 mit Hilfe eines Umlenkgetriebes 17 in Form eines doppelten Kurbeltriebs. An einem vertikal nach oben aus dem Zentralteil 2 herausragenden Lagerzapfen 18 ist eine einstückig ausgeführte Doppelkurbel 19 drehbar gelagert. Am Ende jedes Armes der Doppelkurbel 19 ist gelenkig eine Koppelstange 20 angelenkt, die wiederum gelenkig mit der Oberseite eines der beiden Schaufelträger 8 verbunden ist. Vollführt somit der mit der Kolbenstange 16 des Pneumatikzylinders 14 verbundene Schaufelträger 8 z.B. eine Bewegung von dem Zentralteil 2 weg, so führt dies über die zugeordnete Koppelstange 20 zunächst zu einer Drehbewegung der Doppelkurbel 19, die über die andere Koppelstange 20 in gleichen Maße zu einer linearen Verschiebung des anderen Schaufelträgers 8 von dem Zentralteil 2 weg führt. Die Bewegung der beiden Schaufelelemente 4 und Schaufelträger 8 erfolgt somit stets synchron und mit dergleichen Geschwindigkeit.

Zusätzlich zu den Führungsstangen 7, die in Bohrungen des Zentralteils 2 gelagert sind, ist das Saugelement 3 noch an gegenüber liegenden Seiten über zwei Gasfedern 21 mit dem Zentralteil 2 verbunden. Die Gasfedern 21 sind in rinnenförmigen Ausnehmungen an Stirnflächen 22 des Zentralteils 2 befestigt und ihre Kolbenstangen 23 führen zu dem Saugelement 3 und sind dort mittels jeweils eines Gelenkkopfs 24 an seitlich aus dem Saugelement 3 herausragenden Lagerzapfen 25 angeschlossen. Gegen die Kraft der Gasfedern 21 lässt sich somit das Saugelement 3 entlang der Führungsstangen 7 nach oben, d.h. auf das Zentralteil 2 zu, bewegen, wobei die Federkonstante der Gasfeder 21 einstellbar ist.

Das Saugelement 3 weist ein Oberteil 27 auf, an das die Führungsstangen 7 und die Gasfedern 21 anschließen. An dem Oberteil 27 befindet sich auch ein Anschlussstutzen 28 zur Versorgung des Saugelements 3 mit Unterdruck und Überdruck. An einem einstückig mit dem Oberteil 27 verbundenen Unterteil 29 des Saugelements 3 ist an dessen unterem Ende eine ringförmige Kontaktfläche 30 ausgebildet, die beim Aufsetzen des Saugelements 3 auf eine aufzunehmende Portion mit deren Oberfläche in Kontakt kommt und die für den Unterdruckaufbau erforderliche Abdichtung ermöglicht.

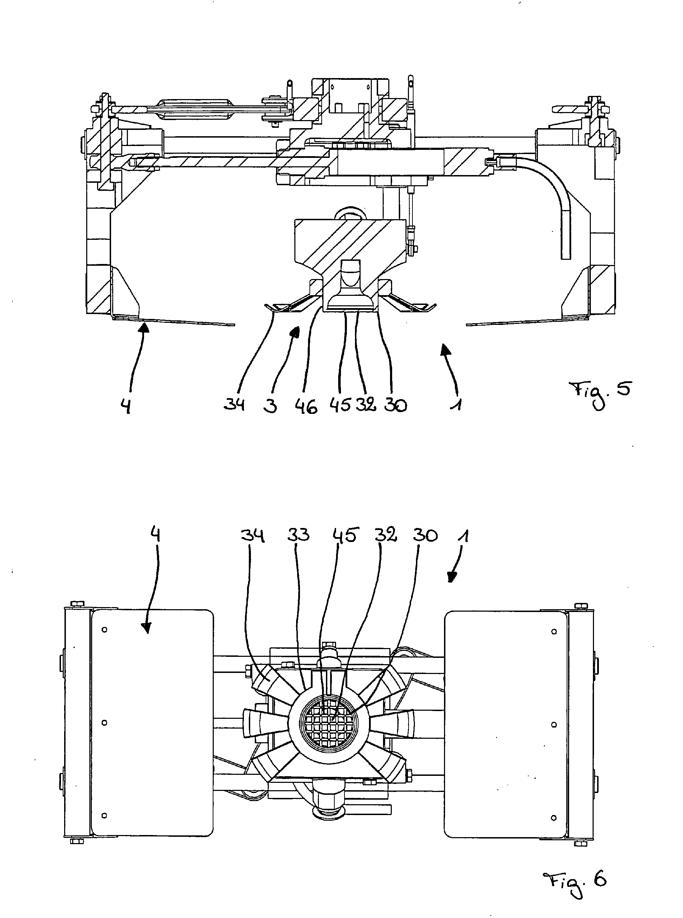

Eine von dem Anschlussstutzen 28 ausgehende, in der Zeichnung nicht dargestellte Leitung führt entlang der Trageinrichtung der Greifeinrichtung 1 zu einem Ort, an dem der Unterdruck bzw. Überdruck erzeugt wird. Dies geschieht im vorliegenden Fall mit Hilfe einer Kolben-Zylinder-Einheit 36, deren Kolben 37 von einem weiteren Pneumatikzylinder 38 hin und her bewegt werden kann, wobei die beiden Kolben 37, 39 der Kolben-Zylinder Einheit 36 und des Pneumatikzylinders 38 über ein Kopplungselement 40 miteinander verbunden sind, das an den aneinander stoßenden Enden von deren Kolbenstangen 43, 44 angeordnet ist. Bewegt sich der Kolben 37 der Kolben-Zylinder-Einheit 36 von seinem oberen Totpunkt OT zu seinem unteren Totpunkt UT, so wird in dem Zylinderraum 41 der Kolben-Zylinder-Einheit 36 aber auch in der Leitung zu der Greifeinrichtung 1, die an einen Anschlussnippel 42 angeschlossen ist, und einem Innenraum 31 des Saugelements 3 ein Unterdruck erzeugt, wenn ein Öffnungsquerschnitt 32 (siehe Unteransicht gemäß Fig. 6) im Bereich der Kontaktfläche 30 von einer aufzunehmenden Portion des Lebensmittels versperrt ist. Es kommt somit zu einer Fixierung der Lebensmittelportion durch Ansaugung an dem Unterteil 29 des Saugelements 3. Wie sich gleichfalls der Unteransicht gem. Fig. 6 entnehmen lässt, ist der Öffnungsquerschnitt 32 an der Unterseite des Saugelements 3 teilweise durch ein Gitter 45 versperrt, um zu verhindern, dass kleine Portionen oder lose Stücke von Portionen durch den Unterdruck in das Saugelement eingesaugt werden und dort beispielsweise die zu der Unterdruck-Erzeugungseinrichtung führende Unterdruckleitung verstopfen. Das Gitter 45, das auch eine größere Verformung der Portion (und damit einen nur unvollkommenen Vakuumaufbau), insbesondere in Form dünner Scheiben verhindert, besteht aus rechtwinklig zueinander verlaufenden Gitterstäben, die zusammen quadratische Öffnungen mit einer lichten Weite von jeweils ca. 10 mm x 10 mm begrenzen. Das Gitter 45 an dem Saugelement 3 ist auch in der Schnittdarstellung gemäß Fig. 5 zu erkennen und verhindert durch die verkleinerten Luftdurchtrittsbereiche, dass an der erfassten Portion bleibende Markierungen bzw. Ausbeulungen im Bereich der Angriffsfläche des Vakuums entstehen. Das Gitter 45 ist typischerweise im Bereich des Öffnungsquerschnitts 32 in das Saugelement eingesetzt. Es kann aus einem metallischen oder auch einem Kunststoffmaterial bestehen. Die Kontaktfläche 30 an der Unterseite des Saugelements 3 ist kreisringförmig ausgebildet und sorgt aufgrund ihrer vergleichsweise geringen Breite für ein gewisses "Einschneiden" bzw. Eindrücken in das Material der aufzunehmenden Portion, wodurch eine zuverlässige Abdichtung erzielt wird. Das Gitter 45 ist gegenüber der Kontaktfläche 30 leicht nach oben zurückgesetzt.

Beim Absetzen von Portionen wird der Kolben 37der Kolben-Zylinder-Einheit 36 entsprechend von seinem unteren Totpunkt UT zum oberen Totpunkt OT bewegt, wodurch auch in dem Innenraum 31 des Saugelements 3 ein entsprechender Überdruck erzeugt wird, durch den die Lebensmittelportion beschleunigt nach unten abgesetzt werden kann. Dies gilt insbesondere dann, wenn das Vakuum unmittelbar zuvor durch Belüftung durch ein separates Schaltventil in der Leitung aufgehoben wurde.

An dem Unterteil 29 des Saugelements 3 befindet sich ein geschlitzter Tragring 33, der an gegenüber liegenden Seiten, die jeweils einem Schaufelelement 4 zugewandt sind, jeweils drei radial verlaufende Arme 34 besitzt, deren Enden 35 nach oben gebogen sind. Die Arme 34 haben die Funktion, ein "Umklappen" von Portionen, die vergleichsweise weit über eine äußere Mantelfläche 46 des Saugelements 3 radial nach außen überstehen, zu verhindern. Ein solches "Umklappen" der Portion kann insbesondere bei einem raschen Absenken des Saugkopfs 3 oder aber auch bei hohen Querbeschleunigungen desselben auftreten. Da die Ablagequalität durch ein derartiges Umklappen beeinträchtigt würde (weil ein kontrolliertes und zu verlässiges Rückklappen der Portion schwierig vorherzusehen und zu überwachen ist), müssen solche tendenziell unkontrollierbaren Bewegungen der Portion möglichst sicher vermieden werden.

Der Anpressdruck der Arme 34 ist vergleichsweise gering, um ein sicheres Untergreifen der Lebensmittelportion durch die Schaufelblätter 12 nicht zu behindern. Die Arme 34 können sowohl aus metallischem Material insbesondere aus Federstahl oder aber aus einem geeigneten Kunststoffmaterial ausgeführt sein. Sie können integral mit dem Tragring 33 hergestellt oder aber in diesen eingesetzt oder an diesen angesetzt sein.

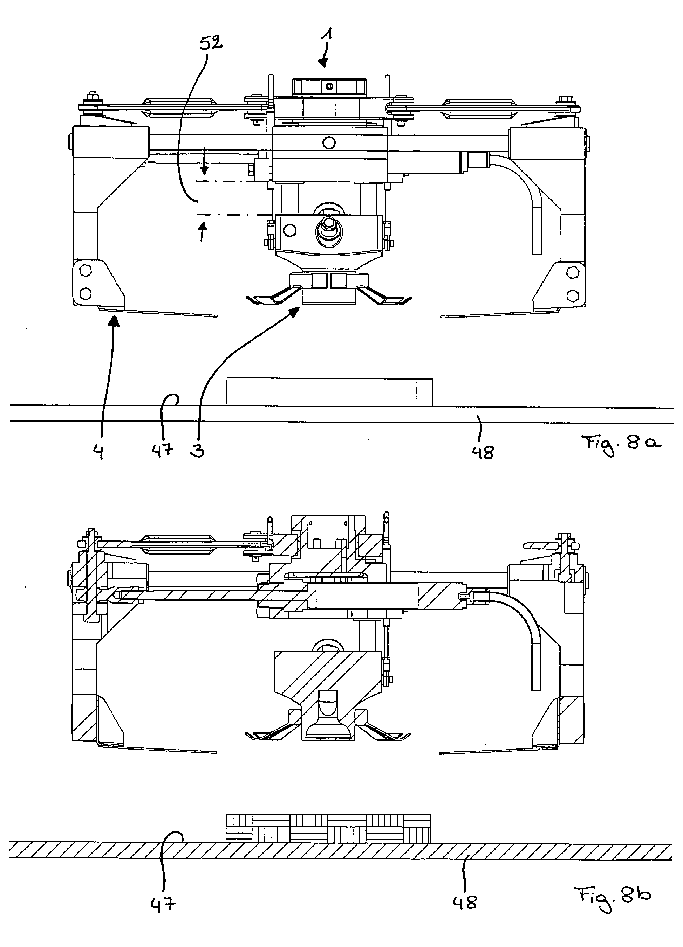

Der Ablauf des erfindungsgemäßen Verfahrens beim Ergreifen, Verlagern und Wiederabsetzen einer Portion eines Lebensmittels wird nunmehr anhand der Figuren 8a bis 13b näher erläutert:
In den Fig. 8a und 8b ist die Greifeinrichtung 1 mit auseinander gefahrenen Schaufelelementen 4 oberhalb einer Portion eines Lebensmittels, beispielsweise eines Schweinekoteletts, positioniert, welches sich auf einer Oberfläche 47 eines Transportbandes 48 befindet.

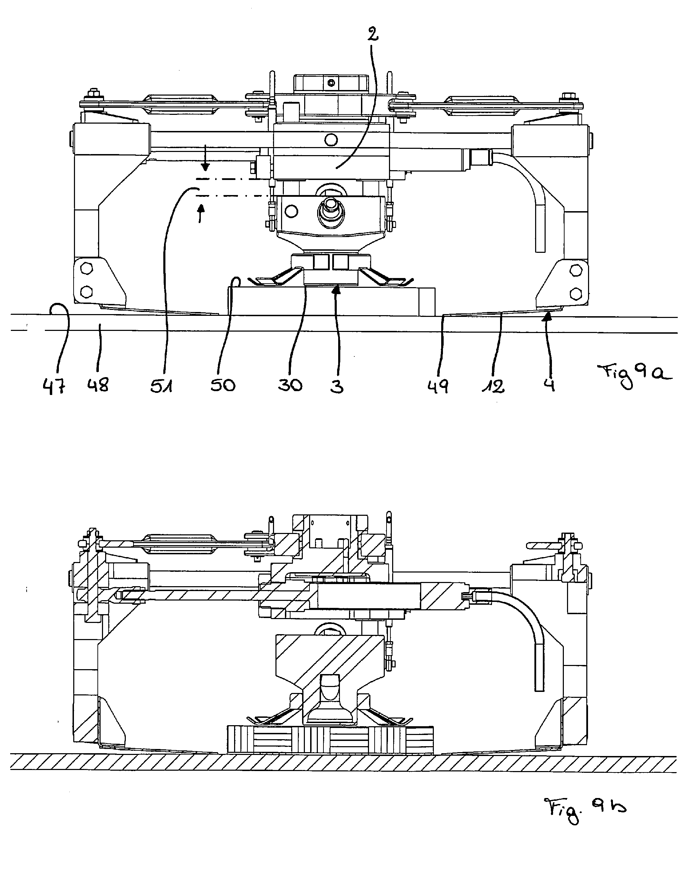

In den Fig. 9a und 9b ist das Greifelement 1 in vertikale Richtung in soweit auf das Transportband 48 abgesenkt, dass jeweils eine Vorderkante 49 der Schaufelblätter 12 der Schaufelelemente 4 auf der Oberfläche 47 des Transportbandes 48 aufliegen. Bevor diese Stellung erreicht ist, setzt das Saugelement 3 bereits mit seiner ringförmigen Kontaktfläche 30 auf einer Oberfläche 50 der Portion des Lebensmittels auf. Da dies zeitlich vor dem Aufsetzen der Vorderkanten 49 der Schaufelblätter 12 erfolgt, findet im Zuge der fortgesetzten Absenkung der Greifeinrichtung 1 eine Relativbewegung zwischen dem Saugelement 3 und dem Zentralteil 2 statt. Dies ist erkennbar an dem modifizierten Maß 51 des Abstandes zwischen einer Oberseite des Saugelements 3 und einer Unterseite des Zentralteils 2 gegenüber dem ursprünglichen Maß 52 gemäß Fig. 8a, in der das Saugelement 3 noch nicht auf der Lebensmittelportion aufgesetzt hat. Das Maß der hier rein vertikalen Relativbewegung berechnet sich somit als Differenz zwischen Maß 52 und Maß 51.

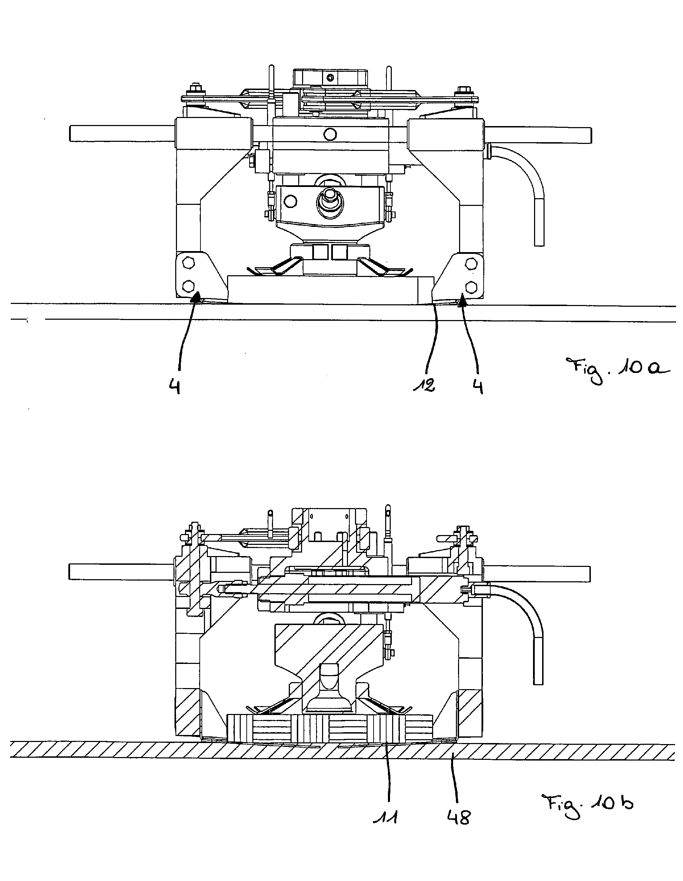

Die Fig. 10a und 10b zeigen den anschließenden Zustand, in dem die Schaufelelemente 4 zusammengefahren wurden, so dass die Schaufelblätter 12 die Portion unterfahren haben. In der Darstellung gemäß Fig. 10b wird der fälschliche Eindruck erweckt, als ob die Schaufelblätter 12 mit Ihren Vorderabschnitten innerhalb des Transportbandes 48 angeordnet werden, was natürlich technisch unmöglich ist und durch eine Funktionalität des Zeichenprogramms bedingt ist.

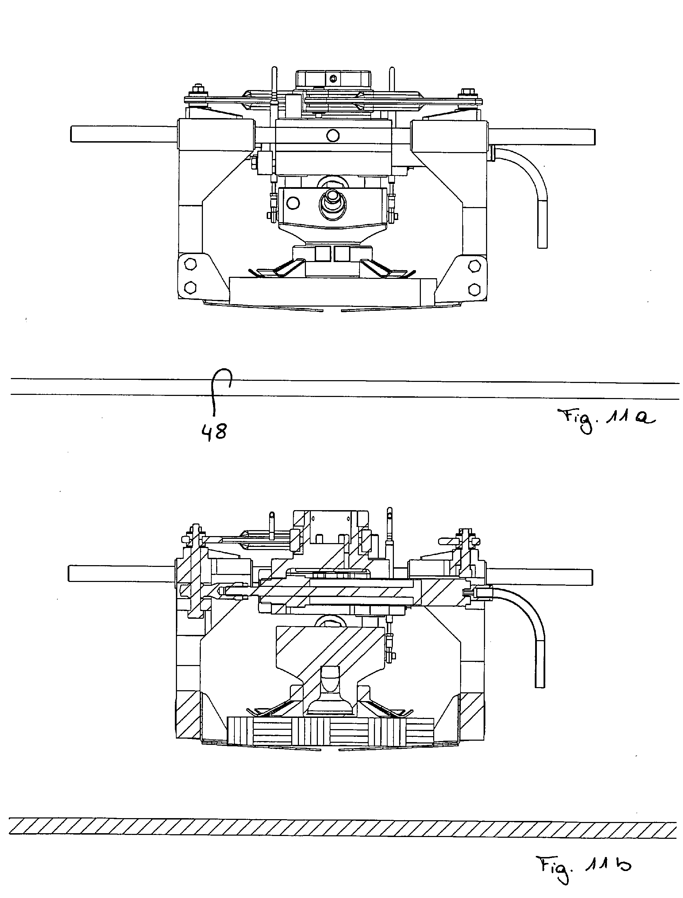

Nach dem die Lebensmittelportion untergriffen ist, wird sie - wie in den Fig. 11a und 11b dargestellt-von dem Transportband 48 abgehoben und kann nunmehr, was in den Figuren nicht dargestellt ist, sowohl in Längsrichtung als auch in Querrichtung des Transportbandes 48 verlagert werden.

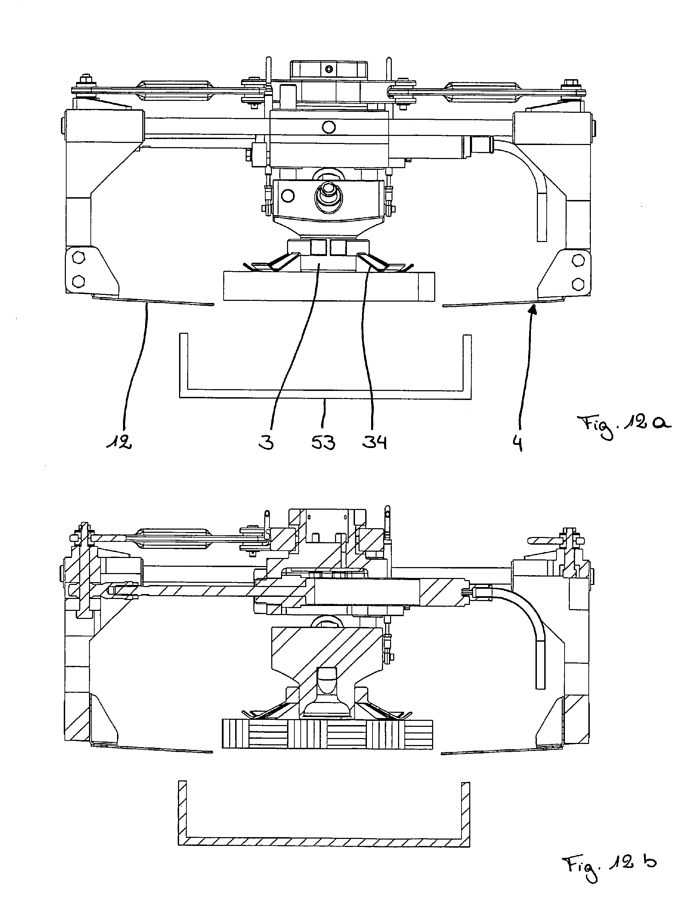

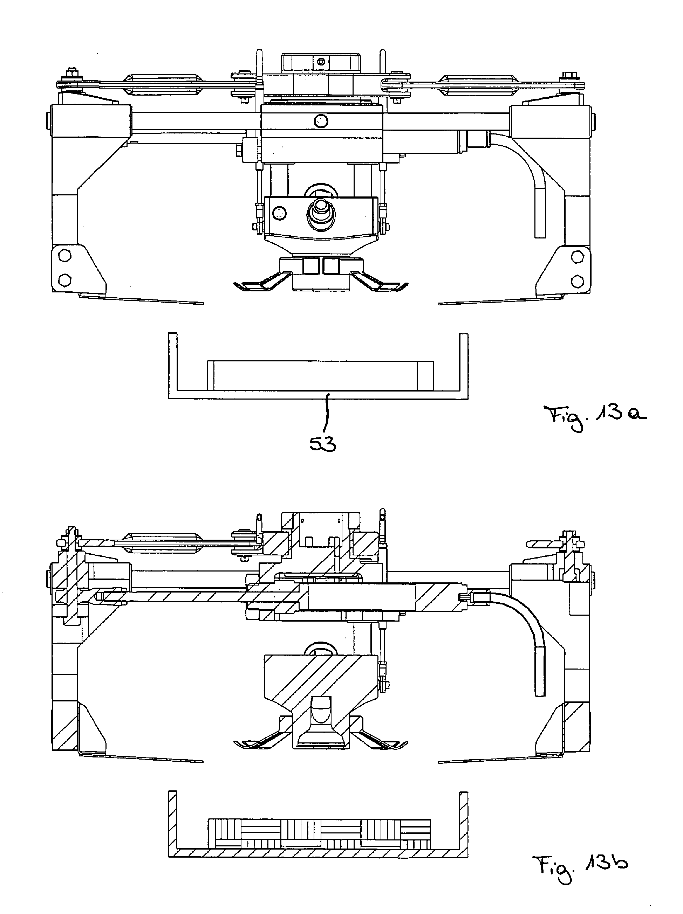

Die Fig. 12a und 12b zeigen die Position des Greifelements 1 nach Beendigung dieses von der Trageinrichtung durchgeführten Verlagerungsvorgangs. Die Greifeinrichtung 1 und insbesondere die Portion des Lebensmittels befindet sich nunmehr oberhalb einer Schale 53 einer SB-Lebensmittelverpackung, in der die Portion in einem späteren Schritt verpackt werden wird. Die Fig. 12a und 12b zeigen dabei eine Phase, in der die Schaufelelemente 4 zwar schon auseinander gefahren sind und somit die Portion nicht mehr unterstützen, in der jedoch das Saugelement 3 noch aktiv ist, weshalb die Portion noch an der Greifeinrichtung 1, d.h. dem Saugelement 3 hängt. Da in den Fig. 12a und 12b ein Moment dargestellt ist, in dem die Schaufelblätter 12 gerade zurückgezogen wurden, befinden sich die Arme 34 noch an der Oberseite der Portion des Lebensmittels. In den Fig. 13a, 13b ist nunmehr der Endzustand der in der Schale 53 abgelegten Lebensmittelportion dargestellt. Der Abwurf der Portion von dem Saugelement 3 wird dadurch eingeleitet, dass zunächst das darin herrschende Vakuum - zumindest teilweise - aufgehoben und anschließend - um den Ablageprozess zu beschleunigen - im Innern es Saugelements 3 mittels der Kolben-Zylinder-Einheit 36 ein Überdruck erzeugt wird, um einen Abwurf der Portion mit einer nach unten gerichteten Beschleunigung zu erhalten, die größer ist, als die Erdbeschleunigung.

### Bezugszeichenliste

- 1: Greifeinrichtung
- 2: Zentralteil
- 3: Saugelement
- 4: Schaufelelement
- 5: Linearführung
- 6: Führungsstange
- 7: Führungsstange
- 8: Schaufelträger
- 9: Lagerbuchse
- 10: Durchbruch
- 11: Verbindungswinkel
- 12: Schaufelblatt
- 13: Oberfläche
- 14: Pneumatikzylinder
- 15: Druckluftleitung
- 16: Kolbenstange
- 17: Umlenkgetriebe
- 18: Lagerzapfen
- 19: Doppelkurbel
- 20: Koppelstange
- 21: Gasfeder
- 22: Stirnfläche
- 23: Kolbenstange
- 24: Gelenkkopf
- 25: Lagerzapfen
- 26: Vorderkante
- 27: Oberteil
- 28: Anschlussstutzen
- 29: Unterteil
- 30: Kontaktfläche
- 31: Innenraum
- 32: Öffnungsquerschnitt
- 33: Tragring
- 34: Arm
- 35: Ende
- 36: Kolben-Zylinder-Einheit
- 37: Kolben
- 38: Pneumatikzylinder
- 39: Kolben
- 40: Kopplungselement
- 41: Zylinderraum
- 42: Anschlussnippel
- 43: Kolbenstange
- 44: Kolbenstange
- 45: Gitter
- 46: Mantelfläche
- 47: Oberfläche
- 48: Transportband
- 49: Vorderkante
- 50: Oberfläche
- 51: Maß
- 52: Maß
- 53: Schale
- OT: oberer Totpunkt
- UT: unterer Totpunkt

## Patentansprüche

1. Verfahren zum Aufnehmen von Portionen, insbesondere von Scheiben, eines Lebensmittels von einer Oberfläche eines Transportmittels, insbesondere von einem sich bewegenden Band, zum Verlagern der aufgenommenen Portionen und zum Ablegen der Portionen an einem Zielort, insbesondere in oder auf einer Verpackung, mit den folgenden Verfahrensschritten:
- Portionen eines Lebensmittels werden auf einer Oberfläche eines insbesondere umlaufenden Transportmittels in eine Transportrichtung bewegt,
- sukzessive nach einander wird jeweils eine Portion mittels einer Greifeinrichtung (1) ergriffen, wobei
- ein Fixierelement (3) auf einer einer Auflagefläche der Portion entgegengesetzten freien Oberfläche der Portion mit dieser in Kontakt gebracht wird und
- mindestens zwei Schaufelelemente (4) der Greifeinrichtung (1) aufeinander zu bewegt werden, wobei die Portion von entgegengesetzten Seiten her untergriffen wird,
- die untergriffene Portion wird von der Oberfläche des Transportmittels abgehoben, indem die Greifeinrichtung (1) entsprechend bewegt wird,
- die abgehobene Portion wird mittels der Greifeinrichtung (1) quer zu der Transportrichtung bewegt und oberhalb des Zielortes positioniert,
- die zwei Schaufelelemente (4) werden von einander weg bewegt, wobei die positionierte Portion an dem Zielort abgelegt wird, wobei
- die Portion mittels des als Saugelement (3) ausgebildeten Fixierelements (3) der Greifeinrichtung (1) angesaugt und dadurch fixiert wird,
**gekennzeichnet durch** den folgenden Verfahrensschritt:
- Das Saugelement (3) wird, nachdem es mit der freien Oberfläche der Portion in Kontakt gekommen ist, zumindest mit einer vertikalen Bewegungskomponente relativ zu den Schaufelelementen (4) bewegt.

2. Verfahren nach Anspruch 1, **dadurch gekennzeichnet, dass** die Portion in einem Mittelbereich der freien Oberfläche angesaugt und fixiert wird.

3. Verfahren nach Anspruch 1 oder 2, **dadurch gekennzeichnet, dass** ein Unterdruck in dem Saugelement (3) mittels einer Kolben-Zylinder-Einheit (36) durch einmalige Hubbewegung des Kolbens (39) in dem Zylinder erzeugt wird, wobei vorzugsweise der Unterdruck in dem Saugelement (3) an einem von der Greifeinrichtung (1) beabstandeten Ort erzeugt und mittels einer Leitung von dem Ort zu dem Saugelement (3) übertragen wird.

4. Verfahren nach einem der Ansprüche 1 bis 3, **dadurch gekennzeichnet, dass** das Saugelement (3) beim Ablegen einer Portion mit einem Überdruck beaufschlagt wird, wodurch der Portion eine abwärts auf den Zielort gerichtete Beschleunigung erteilt wird, die größer als die Erdbeschleunigung ist.

5. Verfahren nach einem der Ansprüche 1 bis 4, **dadurch gekennzeichnet, dass** die aufeinander zu gerichtete Bewegung der zwei Schaufelelemente (4) zu einem Zeitpunkt beendet wird, zu dem zwischen gegenüber liegenden Vorderkanten (26) der Schaufelelemente (4) ein Abstand besteht.

6. Vorrichtung zum Aufnehmen, Verlagern und Ablegen von Portionen, insbesondere Scheiben, eines Lebensmittels, wobei die Portionen von einem sich bewegenden Transportmittel aufnehmbar, zu einem Zielort bewegbar und dort absetzbar sind, mit
- einer Trageinrichtung, die mindestens in vertikale Richtung und in eine Richtung senkrecht zu einer Transportrichtung bewegbar ist,
- einer an der Trageinrichtung angeordneten Greifeinrichtung (1), die zwei aufeinander zu bewegbare Schaufelelemente (4) aufweist, mit denen eine Portion von entgegengesetzten Seiten her untergreifbar ist,
- einer Fixiereinrichtung (3), mit der eine Portion an einer einer Auflagefläche der Portion entgegengesetzten freien Oberfläche an der Greifeinrichtung (1) fixierbar ist, wobei
- das Fixierelement (3) als Saugelement (3) ausgebildet ist, mit dem die Portion ansaugbar und dadurch an der Greifeinrichtung (1) fixierbar ist,
**dadurch gekennzeichnet, dass**
- das Saugelement (3) so an der Greifeinrichtung (1) gelagert ist, dass es zumindest mit einer vertikalen Bewegungskomponente relativ zu den Schaufelelementen (4) beweglich ist.

7. Vorrichtung nach Anspruch 6, **dadurch gekennzeichnet, dass** das Saugelement (3) mittels einer Kolben-Zylinder-Einheit (36) mit einem Unterdruck und/oder Überdruck beaufschlagbar ist, wobei vorzugsweise eine Einrichtung zur Erzeugung von Unterdruck und/oder Überdruck, insbesondere eine Kolben-Zylinder-Einheit (36), stillstehend in einem Abstand von der Greifeinrichtung (1) angeordnet und der Unterdruck und/oder Überdruck mittels einer Leitung zu dem Saugelement (3) übertragbar ist.

8. Vorrichtung nach Anspruch 6 oder 7, **dadurch gekennzeichnet, dass** das Saugelement (3) - in eine Bewegungsrichtung der Schaufelelemente (4) betrachtet - mittig zwischen den Schaufelelementen (4) angeordnet ist.

9. Vorrichtung nach einem der Ansprüche 6 bis 8, **dadurch gekennzeichnet, dass** eine Kontaktfläche (30) des Saugelements (3), die bei der Fixierung der Portion mit deren Oberfläche ein Berührung kommt, ohne Einwirkung äußerer Kräfte einen vertikalen Abstand von Unterflächen oder Vorderkanten (26) der beiden Schaufelelemente (4) aufweist, der maximal der vertikalen Höhe der dünnsten aufzunehmenden Portion entspricht, wobei das Saugelement (3) relativ zu den Schaufelelementen (4) so bewegbar ist, dass der Abstand der Kontaktfläche (30) des Saugelements (3) von den Unterflächen oder Vorderkanten (26) der Schaufelelemente (4) vergrößerbar ist und zwar mindestens um ein Maß, das der Differenz zwischen der Höhe der dicksten aufzunehmenden Portion und der Höhe der dünnsten aufzunehmenden Portion entspricht.

10. Vorrichtung nach Anspruch 9, **dadurch gekennzeichnet, dass** das Saugelement (3) entgegen der Kraft eines Federelements, vorzugsweise einer Gasfeder (21), relativ zu den Schaufelelementen (4) bewegbar, insbesondere vertikal verschiebbar ist, wobei das Federelement in eine solche Richtung vorgespannt ist, dass sich die Kontaktfläche (30) des Saugelements (3) ohne Einwirkung äußerer Kräfte in einem Abstand zu den Unterflächen oder Vorderkanten (26) der Schaufelelemente (4) befindet, in dem die dünnste mögliche Portion aufnehmbar ist.
